# EUROPEAN PATENT SPECIFICATION

(11) **EP 4 203 668 B1**
(45) Date of publication and mention of the grant of the patent: **21.02.2024**
(21) Application number: 20811580.8
(22) Date of filing: 20.11.2020
(51) Int. Cl.: A01G 3/037

(54) **CUTTING TOOL**
SCHNEIDWERKZEUG
OUTIL DE COUPE

(43) Date of publication of application: 05.07.2023
(73) Proprietor: HUSQVARNA AB, 561 82 Huskvarna (SE)
(72) Inventor: BROBEIL, Achim, 89134 Blaustein (DE); REH, Bernhard, 89150 Laichingen (DE); SCHNEIDER, Regina, 89250 Senden (DE)
(74) Representative: Finkele, Rolf
(86) International application number: PCT/EP2020/082841
(87) International publication number: WO 2022/106020

(56) References cited:
- WO-A1-2007/059544
- US-A- 5 867 909
- US-A1- 2018 103 593

## Description

The present invention relates generally to the field of cutting tools. More specifically, the present invention is related to gardening cutting tools.

### BACKGROUND OF THE INVENTION

Cutting tools for gardening such as garden shears, secateurs or pruning shears are commonly known in the art.

The documents EP 3 262 923 B1 and US 2018/103593 A1 disclose a garden cutting device having a first and a second cutting element that are movable relative to one another and a first and a second handle element that are movable relative to one another and having a drive unit that is intended to assist a movement of the second cutting element relative to the first cutting element. In order to provide an assisting force, a retractable rope connects the first and the second handle that can be retracted by rotating a shaft and winding the rope around the shaft. The shaft is supported on one end by a bearing attached to the housing of the handle and on the other end within a housing of a coupling unit.

### SUMMARY OF THE INVENTION

It is an objective of the present invention to provide a cutting tool with an improved mechanical structure.

This objective is achieved by a cutting tool according to claim 1. Such a cutting tool, in particular a gardening cutting tool such as a garden shears, a secateur or a pruning shears, comprises one first cutting element and one second cutting element that are coupled pivotally movable relative to each other and at least one drive unit that is configured to provide a drive force that causes or assists to causing a pivotal closing movement of the first cutting element and the second cutting element relative to each other, wherein the second cutting element comprises a blade section configured to be in contact with a subject to be cut in a cutting process and a shaft section that is configured to receive at least a substantial part of the drive force in a cutting process to cause or to assist to the pivotal closing movement of the first cutting element and the second cutting element relative to each other, wherein the drive unit is supportedly coupled to the shaft section of the second cutting element, wherein the cutting tool comprises a first handle being operably coupled to the first cutting element and a second handle being operably coupled to the second cutting element.

Manually operated cutting tools with motorized assistance commonly comprise a common coupling structure for coupling a driven element driven by a drive unit to a cutting element that shall be subject to the assistance force provided by the motor in addition to a manual force applied by a user. According to the prior art, it is known to attach a drive unit or a part of a drive unit inside of a handle part of such a cutting tool and to fix the drive unit thereto. It has been observed by the applicant that handle parts of such a cutting tool may be subject to deformation when a drive force is provided. The reason for such a deformation is that the drive unit is not sufficiently supported in the handle part against the drive force acting on the drive unit. In order to overcome this problem, the applicant suggests to supportedly couple the drive unit or a part of the drive unit to a shaft section of the second cutting element. Supportedly coupled shall be understood in the sense of structurally or mechanically coupled as to support mechanical forces acting on the drive unit, so as to achieve a rigid or firm or inflexible mechanical support. Thus, the drive force acting on the drive unit is supported directly on the second cutting element and the handle part which is less rigid compared to the cutting element is relieved from the drive force. Thus, a very rigid and stable mechanical structure for a cutting tool is achieved in which the drive force is transferred from the drive unit directly into the cutting element without being transferred through a less rigid component such as a handle.

According to the invention, the drive unit is supported on a support section of the shaft section.

Additionally, the support section may comprise a support surface on which the drive unit is supported.

Supporting the drive unit on a support section of the shaft is advantageous, because a dedicated support section enables an efficient coupling of the drive unit thereto. Additionally advantageous it is, that the drive unit is supported against the direction in which the drive force is effective. A dedicated support surface allows to support the drive force in a very even manner. It shall be appreciated that the direction in which the drive force is effective may pivot in response to the pivotal closing movement of the cutting tool and therefore the expression "direction" shall be understood as including all directions varying over the pivotal closing movement and in which the drive force in fact can be effective in the cutting tool depending on the fixation positions of respective drive unit components relevant for applying the drive force to the cutting tool.

According to a further advantageous embodiment of the invention, at least the support section, in particular the complete shaft section, is provided with a plate-like cross section. The support section may comprise a support surface on which the drive unit can be supported. The support surface may be formed by a front edge of the plate-like cross section and a broader side of the plate-like cross section may extend in a direction substantially parallel to a direction in which the drive force is effective.

Providing the support section with a plate-like cross section enables the support section to be structural very rigid. If the support section and in particular the plate-like cross section comprises a support surface for supporting the drive unit, a stable and tilt-resistant support is created. If the support surface is formed by the front edge of the plate-like cross section and the broader side of the plate-like cross section extends parallel to a direction in which the drive force is effective, the area moment of inertia of the support section or of the shaft section as a whole can be oriented such as to resist to deformation resulting from the drive force.

In a further advantageous embodiment of the invention, the support section comprises a support surface on which the drive unit is supported and the support surface is oriented with an angle of less then 20 degrees relative, more preferably of less than 10 degrees relative, even more preferably oriented substantially parallel, to a longitudinal axis (B) of a drive shaft of the drive unit. Thus, the support surface may be arranged in an angle relative to or parallel to the drive shaft in a way to advantageously resist mechanically caused deformation resulting from the drive force being exerted in a direction substantially perpendicular or slightly angled relative to the drive shaft. Further, orienting the support surface in an angle relative to the drive shaft may be advantageous since the drive shaft and the support surface may pivot relative to each other in consequence to a pivotal closing movement of the cutting tool.

In the present invention, the support section is formed in an end section of the shaft section, wherein the end section may comprise a recess in which the drive unit may be arranged at least partially and wherein the support section, in particular the force receiving arm, may delimit the recess at least on one side. The provide the support section in an end section of the shaft section exploits the leveraging effect advantageously. The drive unit arranged in a recess delimited by the force receiving arm is seated stably. Even if large manual forces are applied to the cutting tool, the drive unit may not be displaced and therefore reliable function of the drive unit is ensured even under harsh operating conditions.

In a further advantageous embodiment, the second handle is configured to be manually held by a user, wherein at least a part of the drive unit and at least a part of the shaft section are arranged within one or more cavities formed by the handle, in particular wherein at least a part of the drive unit and at least a part of the shaft section are rigidly fixed to the handle. Thus, a comfortable cutting tool is achieved in which deformation of the handle due to the effect of the drive force is avoided.

In the present invention, at least one support structure is provided in the handle of the cutting tool, wherein the support structure is configured to provide supporting contact between a bearing of the drive unit and the support section of the shaft section, at least when the drive unit is driven to exert the drive force and/or at least when the user exerts manual force on the handle. Such a support structure enables correct mounting of the drive unit on or within the handle such that supporting contact is secured between drive unit and support section. Further, the drive unit and the shaft section are securely held in position, in particular relative to each other.

The support structure is configured to provide a seat for the bearing of the drive unit, the bearing provided to support a drive shaft of the drive unit, and may be configured to be arranged at least partially in the recess of the end section of the support section and to support the part of the drive unit being seated in the seat against the support section. Supporting a bearing to which the drive shaft is attached has the positive effect that bending of the drive shaft in response to the drive force can be hindered or prevented. Specifically when the bearing is arranged in a seat provided by the support structure, the bearing can be supported on the shaft section of the cutting element safely.

In an additional advantageous embodiment, the winding element optionally may be operably coupled to the drive shaft. Additionally or alternatively, the drive shaft may be supported on one side by a motor housing of a motor operably coupled to the drive shaft or a gear housing of a gear operably coupled to the drive shaft or a supporting element, in particular a second bearing, and on a second side by the bearing being supportedly coupled to the shaft section of the second cutting element. In such a configuration the drive shaft is supported on two sides, wherein a winding element is provided between the supported positions. Thus, a very bending resistant drive shaft is achieved, wherein at the same time the shaft can be used to wind a cable when driven. According to an additional or alternative advantageous embodiment, the motor and/or the gear and/or the supporting element for supporting the drive shaft is/are received in one or more cavities formed by the handle, in particular wherein the handle may comprise fixation elements projecting into the one or more cavities and rigidly fixing the motor and/or the gear and/or the supporting element to the handle. In such an embodiment, components of the drive unit are fixedly arranged inside of the handle and, thus, secured during operation. Also the components are fixed relative to each other in one support structure which is provided by the handle.

According to a further advantageous embodiment, the shaft section is rigidly fixed to a handle, in particular wherein the handle comprises a fastening element being configured to be in form fitting connection with a recess provided in the shaft section, preferably in such way that the fastening element can be inserted into the recess in a mounting direction such that shaft section can not be moved away at least radially from the fastening element. The shaft section can be releasably fixed to the handle such that the cutting element can be exchanged e.g. by demounting the handle. Thus, the cutting element can be rigidly fixed to the handle when the cutting tool is operated, but still may be exchangeable in the case that the blade is dull.

In a further advantageous embodiment, the fastening element and/or the fixation elements are formed integrally to a handle of the cutting tool. Forming those components integrally to a handle, e.g. made by injection moulding, reduces the overall number of parts necessary for the production of such a cutting tool and simplifies the mounting process thereof.

According to the invention, the cutting tool comprises a pulling element configured to pull a shaft section of the first cutting element towards the shaft section of the second cutting element, in particular wherein the pulling element is a rope that can be wound around a winding element arranged on the drive shaft by rotating the drive shaft. A simple, but reliable pulling element can be used to apply the drive force to the cutting elements to assist the pivotal closing movement therebetween. If the rope is wound up by the winding element, the drive shaft becomes subject to bending that is advantageously prevented by supporting the drive shaft on the shaft section of the cutting element.

In the cutting tool according to the invention, the drive force is supplied directly to the cutting elements without being applied to one or both handles. Thus, no drive force is lost to the deformation of the handles.

### BRIEF DESCRIPTION OF THE DRAWING

The various aspects of the invention, including its particular features and advantages, will be readily understood from the following detailed description and the accompanying drawing, in which:

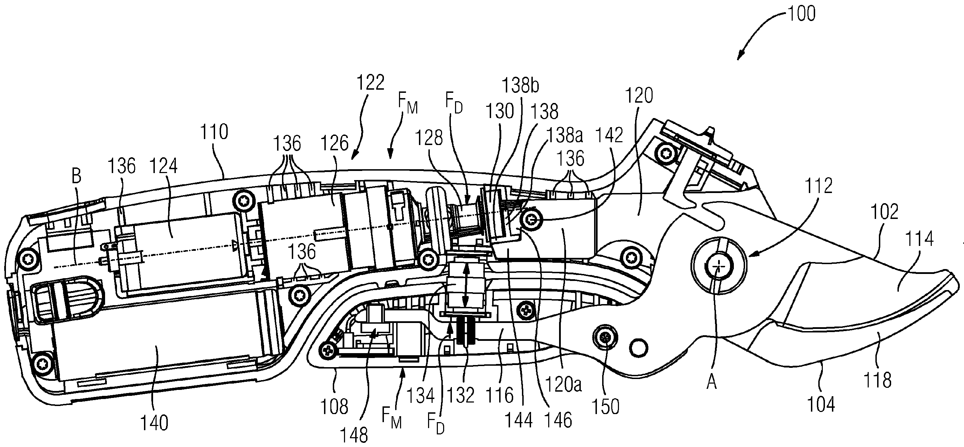

Fig. 1 illustrates a sectional view of an example embodiment of a cutting tool according to the invention;

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

Fig. 1 illustrates an example embodiment of a cutting tool in the specific embodiment of a garden shears. The cutting tool 100 comprises a first and a second cutting element 102, 104 which have respective blade sections 114, 118. The blade section 118 of the second cutting element 104 may comprise a cutting edge or, alternatively, may be formed as an anvil-like support for the subject to be cut opposite to a cutting edge of the first cutting element 102.

First and second blade sections 114, 118 together perform a cutting action on a subject (example given a branch) placed between. For the purpose, first and second cutting elements 102, 104 are coupled pivotally movable relative to each other around a pivot axis A, extending through a pivot point 112.

The first cutting element 102 and the second cutting element 104 are operably coupled to a first handle 108 and a second handle 110, respectively, such that a user can apply a manual force to the first and second handle 108, 110 in order to close the cutting tool to perform a cutting action. First and second cutting elements 102, 104 each comprise a shaft section 116, 120 each being arranged inside a cavity formed by the respective first and second handle 108, 110.

The shaft section 120 of the second cutting element 104 is rigidly fixed to the second handle 110. For this purpose, the second handle 110 may comprise a thread dome 142 which extends through a recess form fitting to the outer contour of the thread dome 142 which may be circular or the like. Thread domes may be used for establishing a fixation of two half shells of a handle to each other, e.g. by a screw connection. Further, the second handle 110 may comprise fixation elements 136 formed as fixation rips for holding the shaft section 120 in position within the second handle 110.

The shaft section 116 of the first cutting element 102 is coupled pivotally movable to the first handle 108. Shaft section 116 and first handle 108 can pivot around a handle pivot point 150 such that a switch 148 can be switched in response to a certain amount of manual force applied to the first handle 110 causing a supporting motor 124 to assist the cutting action with an assisting drive force.

The motor 124 may be part of a drive unit 122 that may additionally include a gear 126, a drive shaft to be driven by the motor 124 or the gear 126, a bearing 130 for supporting the drive shaft, an optional additional bearing (not shown) for additionally supporting the drive shaft, a winding element 128 and a pulling element 132 such as a rope.

As being illustrated in Fig. 1, the drive shaft has a longitudinal axis B that is oriented in a direction of a longitudinal extension of the second handle 110. The winding element 128 is attached on and around the drive shaft such that a rope 132 can be wound around the winding element 128 if the drive shaft is driven by the motor 124 and thus rotated.

An end of the rope 132 is slung around the shaft section 116 of the first cutting element 102 such that the shaft section 116 is pulled towards the second handle 110 or the shaft section 120 of the second cutting element, respectively, in the case that the rope is retracted and wound around the winding element 128 by driving the drive shaft. In this way, an assisting force can be applied to the handles 108, 110 in addition to a manual force applied by a user to the handles.

Motor 124, gear 126 and additional bearing (not shown) can be rigidly fixed to the cavity of the handle 110 by means of a fixation of fixation elements 136 formed from an inner surface of the cavity of the handle 110. The end of the drive shaft that is opposite to the motor 124 or to the gear 126 is supported by a bearing 130.

Thus, the drive shaft is supported on both ends, i.e. the end coupled with the motor 124 or gear 126 inside the motor housing or the gear housing and the opposite is supported on bearing 130.

The bearing 130 is arranged in a seat provided by a support structure 138 that may be formed integrally with the second handle 110. The support structure 138 may have a first and second wall 138a, 138b and optional further walls for fixing the bearing 130 in its position inside of the handle 110. First and second wall 138a, 138b are arranged substantially perpendicular to each other, wherein the bearing 130 is partially enclosed by the walls 138a, 138b. A third wall opposite to the second wall 138b may additionally enclose the bearing 130. The support structure may have a circular form in order to enclose and accommodate a bearing 130 having a circular outer contour.

The second wall 138b is in contact with a front edge of a support section 144 provided by an end section 120 of the shaft section 120 of the second cutting element 104.

In the case that the rope 132 is retracted and a subject to be cut resists the cutting action, the drive shaft would be subject to bending which is hindered by the bearing 130 into which the force is transferred or dissipated from the drive shaft.

The direction of the force acting on the bearing 130 corresponds to the direction in which the rope 132 extends, since the rope 132 applies the force to the drive shaft. Consequently, the bearing 130 is supported on the second wall 138b and on the support section 144 arranged below.

Each displacement of the second wall 138b that is caused by the force acting on the bearing 130 is therefore hindered or impeded by the support section 144.

Alternatively, it is also possible to support the bearing 130 directly on the support surface of the support section 144 and to omit the second wall 138b or the complete support section 144.

In order to provide an automatic opening mechanism of the cutting tool, a spring 134 is provided that may open the cutting tool if no force is applied to the handles 108, 110.

Further, the cutting tool may comprise a battery 140 being arranged inside of the cutting handle 110 or any other appropriate energy supply for the motor 124.

### LIST OF REFERENCE NUMERALS

- 100: Cutting tool
- 102: First cutting element
- 104: Second cutting element
- 108: First handle
- 110: Second handle
- 112: Pivot point
- 114: Blade section
- 116: Shaft section
- 118: Blade section
- 120: Shaft section
- 120a: End section
- 122: Drive unit
- 124: Motor
- 126: Gear
- 128: Winding element
- 130: Bearing
- 132: Pulling element
- 134: Pushing element
- 136: Fixation elements
- 138: Support structure
- 138a: First wall
- 138b: Second wall
- 140: Battery
- 142: Dome
- 144: Support section
- 146: Recess
- 148: Switch
- 150: Handle pivot point
- A: Pivot axis
- B: Longitudinal axis of the drive shaft
- FD: Drive force
- FM: Manual force

## Claims

1. Cutting tool, in particular gardening cutting tool, comprising one first cutting element (102) and one second cutting element (104) that are coupled pivotally movable relative to each other and at least one drive unit (122) that is configured to provide a drive force (F_{D}) that causes or assists to causing a pivotal closing movement of the first cutting element (102) and the second cutting element (104) relative to each other, wherein the second cutting element (104) comprises a blade section (118) configured to be in contact with a subject to be cut in a cutting process and a shaft section (120) that is configured to receive at least a substantial part of the drive force (F_{D}) in a cutting process to cause or to assist to the pivotal closing movement of the first cutting element (102) and the second cutting element (104) relative to each other, wherein the drive unit (122) is supportedly coupled to the shaft section (120) of the second cutting element (104),
- wherein the cutting tool comprises a first handle (108) being operably coupled to the first cutting element (102) and a second handle (110) being operably coupled to the second cutting element (104),
- wherein the drive unit (122) is supported on a support section (144) of the shaft section (120) against the direction in which the drive force is effective,
- wherein the support section (144) is formed in an end section (120a) of the shaft section (120), wherein the end section (120a) comprises a recess (146) in which the drive unit (122) is at least partially arranged and wherein the support section (144) delimits the recess (146) at least on one side,
- wherein at least one support structure (138) is provided in the second handle (110) of the cutting tool, wherein the support structure (138) is configured to provide supporting contact between a bearing (130) of the drive unit (122) and the support section (144) of the shaft section (120) when the drive unit (122) is driven to exert the drive force,
- wherein the support structure (138) is configured to provide a seat for the bearing (130), the bearing provided to support a drive shaft of the drive unit (122), and is configured to be arranged at least partially in the recess (146) of the end section of the support section (144) and to support the bearing of the drive unit (122) being seated in the seat against the support section (144),
- wherein the cutting tool comprises a pulling element (132) configured to pull a shaft section (116) of the first cutting element (102) towards the shaft section (120) of the second cutting element (104),
- wherein the pulling element (132) is a rope that can be wound around a winding element arranged on the drive shaft by rotating the drive shaft.

2. Cutting tool according to claim 1, **characterized in that** the support section (144) comprises a support surface on which the drive unit (122) is supported.

3. Cutting tool according to claim 2, **characterized in that** at least the support section (144), in particular the complete shaft section (120), is provided with a plate-like cross section, in particular wherein the support surface is formed by a front edge of the plate-like cross section and wherein a broader side of the plate-like cross section extends in a direction substantially parallel to a direction in which the drive force is effective.

4. Cutting tool according to claim 2 or 3, **characterized in that** the support surface is oriented with an angle of less then 20 degrees relative, more preferably of less than 10 degrees relative, even more preferably oriented substantially parallel, to a longitudinal axis (B) of the drive shaft of the drive unit (122).

5. Cutting tool according to any one of the preceding claims, **characterized in that** the the second handle (110) is configured to be manually held by a user, wherein at least a part of the drive unit (122) and at least a part of the shaft section (120) are arranged within one or more cavities formed by the second handle (110), in particular wherein at least a part of the drive unit (122) and at least a part of the shaft section (120) are rigidly fixed to the second handle (110).

6. Cutting tool according to any one of the preceding claims, **characterized in that** the winding element (128) is operably coupled to the drive shaft and wherein the drive shaft is supported on one side by a motor housing of a motor (124) operably coupled to the drive shaft or a gear housing of a gear (126) operably coupled to the drive shaft or a supporting element, in particular a second bearing, and on a second side by the bearing (130) being supportedly coupled to the shaft section (120) of the second cutting element (104).

7. Cutting tool according to claim 6, **characterized in that** the motor (124) and/or the gear (126) and/or the supporting element for supporting the drive shaft is/are received in one or more cavities formed by the second handle (110), in particular wherein the second handle (110) comprises fixation elements (136) projecting into the one or more cavities and rigidly fixing the motor (124) and/or the gear (126) and/or the supporting element to the handle (108, 110).

8. Cutting tool according to any one of the preceding claims, **characterized in that** the shaft section (120) is rigidly fixed to the second handle (110), in particular wherein the second handle (110) comprises a fastening element being configured to be in form fitting connection with a recess provided in the shaft section (120), preferably in such way that the fastening element can be inserted into the recess in a mounting direction such that shaft section (120) can not be moved away at least radially from the fastening element.

9. Cutting tool according to any one of the preceding claims 7 or 8, **characterized in that** the fastening element and/or the fixation elements (136) are formed integrally to the second handle (110) of the cutting tool.

## Patentansprüche

1. Schneidwerkzeug, insbesondere Gartenschneidwerkzeug, umfassend ein erstes Schneidelement (102) und ein zweites Schneidelement (104), die relativ zueinander schwenkbar bewegbar gekoppelt sind, und mindestens eine Antriebseinheit (122), die konfiguriert ist, um eine Antriebskraft (F_{D}) bereitzustellen, die eine schwenkende Schließbewegung des ersten Schneidelements (102) und des zweiten Schneidelements (104) relativ zueinander bewirkt oder ein Bewirken dieser unterstützt, wobei das zweite Schneidelement (104) einen Klingenabschnitt (118), der konfiguriert ist, um mit einem zu schneidenden Subjekt in einem Schneidprozess in Kontakt zu sein, und einen Wellenabschnitt (120) umfasst, der konfiguriert ist, um mindestens einen wesentlichen Teil der Antriebskraft (F_{D}) in einem Schneidprozess aufzunehmen, um die schwenkende Schließbewegung des ersten Schneidelements (102) und des zweiten Schneidelements (104) relativ zueinander zu bewirken oder zu unterstützen, wobei die Antriebseinheit (122) mit dem Wellenabschnitt (120) des zweiten Schneidelements (104) stützend gekoppelt ist,
- wobei das Schneidwerkzeug einen ersten Griff (108), der mit dem ersten Schneidelement (102) wirkgekoppelt ist, und einen zweiten Griff (110) umfasst, der konfiguriert ist, um manuell durch einen Benutzer gehalten zu werden und mit dem zweiten Schneidelement (104) wirkgekoppelt zu sein,
- wobei die Antriebseinheit (122) an einem Stützabschnitt (144) des Wellenabschnitts (120) gegen die Richtung gestützt ist, in der die Antriebskraft wirksam ist,
- wobei der Stützabschnitt (144) in einem Endabschnitt (120a) des Wellenabschnitts (120) ausgebildet ist, wobei der Endabschnitt (120a) eine Aussparung (146) umfasst, in der die Antriebseinheit (122) mindestens teilweise angeordnet ist und wobei der Stützabschnitt (144) die Aussparung (146) mindestens auf einer Seite begrenzt,
- wobei mindestens eine Stützstruktur (138) in dem zweiten Griff (110) des Schneidwerkzeugs bereitgestellt ist, wobei die Stützstruktur (138) konfiguriert ist, um einen Stützkontakt zwischen einem Lager (130) der Antriebseinheit (122) und dem Stützabschnitt (144) des Wellenabschnitts (120) bereitzustellen, wenn die Antriebseinheit (122) angetrieben wird, um die Antriebskraft auszuüben,
- wobei die Stützstruktur (138) konfiguriert ist, um einen Sitz für das Lager (130) bereitzustellen, wobei das Lager bereitgestellt ist, um eine Antriebswelle der Antriebseinheit (122) zu stützen, und konfiguriert ist, um mindestens teilweise in der Aussparung (146) des Endabschnitts des Stützabschnitts (144) angeordnet zu sein und um das Lager der Antriebseinheit (122), das in dem Sitz gelegen ist, gegen den Stützabschnitt (144) zu stützen,
- wobei das Schneidwerkzeug ein Zugelement (132) umfasst, das konfiguriert ist, um einen Wellenabschnitt (116) des ersten Schneidelements (102) in Richtung des Wellenabschnitts (120) des zweiten Schneidelements (104) zu ziehen,
- wobei das Zugelement (132) ein Seil ist, das durch Drehen der Antriebswelle um ein auf der Antriebswelle angeordnetes Wickelelement gewickelt werden kann.

2. Schneidwerkzeug nach Anspruch 1, **dadurch gekennzeichnet, dass** der Stützabschnitt (144) eine Stützoberfläche umfasst, auf der die Antriebseinheit (122) gestützt wird.

3. Schneidwerkzeug nach Anspruch 2, **dadurch gekennzeichnet, dass** mindestens der Stützabschnitt (144), insbesondere der vollständige Wellenabschnitt (120), mit einem plattenartigen Querschnitt versehen ist, insbesondere wobei die Stützoberfläche durch eine Vorderkante des plattenartigen Querschnitts ausgebildet ist und wobei eine breitere Seite des plattenartigen Querschnitts sich in einer Richtung im Wesentlichen parallel zu einer Richtung erstreckt, in der die Antriebskraft wirksam ist.

4. Schneidwerkzeug nach Anspruch 2 oder 3,
**dadurch gekennzeichnet, dass** die Stützoberfläche mit einem Winkel von weniger als 20 Grad relativ, mehr bevorzugt von weniger als 10 Grad relativ, noch mehr bevorzugt im Wesentlichen parallel, zu einer Längsachse (B) der Antriebswelle der Antriebseinheit (122) ausgerichtet ist.

5. Schneidwerkzeug nach einem der vorstehenden Ansprüche,
**dadurch gekennzeichnet, dass** mindestens ein Teil der Antriebseinheit (122) und mindestens ein Teil des Wellenabschnitts (120) innerhalb eines oder mehrerer Hohlräume angeordnet sind, die durch den zweiten Griff (110) ausgebildet werden, insbesondere wobei mindestens ein Teil der Antriebseinheit (122) und mindestens ein Teil des Wellenabschnitts (120) an dem zweiten Griff (110) starr fixiert sind.

6. Schneidwerkzeug nach einem der vorstehenden Ansprüche,
**dadurch gekennzeichnet, dass** das Wickelelement (128) mit der Antriebswelle wirkgekoppelt ist und wobei die Antriebswelle auf einer Seite durch ein Motorgehäuse eines Motors (124), der mit der Antriebswelle wirkgekoppelt ist, oder ein Getriebegehäuse eines Getriebes (126), das mit der Antriebswelle wirkgekoppelt ist, oder ein Stützelement, insbesondere einem zweiten Lager, und auf einer zweiten Seite durch das Lager (130) gestützt wird, das mit dem Wellenabschnitt (120) des zweiten Schneidelements (104) stützend gekoppelt ist.

7. Schneidwerkzeug nach Anspruch 6, **dadurch gekennzeichnet, dass** der Motor (124) und/oder das Getriebe (126) und/oder das Stützelement zum Stützen der Antriebswelle in einem oder mehreren Hohlräumen aufgenommen ist/sind, die durch den zweiten Griff (110) ausgebildet sind, insbesondere wobei der zweite Griff (110) Fixierungselemente (136) umfasst, die in den einen oder die mehreren Hohlräume hineinragen und den Motor (124) und/oder das Getriebe (126) und/oder das Stützelement an dem Griff (108, 110) starr fixieren.

8. Schneidwerkzeug nach einem der vorstehenden Ansprüche,
**dadurch gekennzeichnet, dass** der Wellenabschnitt (120) an dem zweiten Griff (110) starr fixiert ist, insbesondere wobei der zweite Griff (110) ein Befestigungselement umfasst, das konfiguriert ist, um mit einer Aussparung, die in dem Wellenabschnitt (120) bereitgestellt ist, in formschlüssiger Verbindung zu sein, vorzugsweise derart, dass das Befestigungselement in die Aussparung in einer Montagerichtung derart eingeführt werden kann, dass der Wellenabschnitt (120) nicht mindestens radial von dem Befestigungselement weg bewegt werden kann.

9. Schneidwerkzeug nach einem der vorstehenden Ansprüche 7 oder 8, **dadurch gekennzeichnet, dass** das Befestigungselement und/oder die Fixierungselemente (136) an dem zweiten Griff (110) des Schneidwerkzeugs einstückig ausgebildet sind.

## Revendications

1. Outil de coupe, en particulier outil de coupe de jardinage, comprenant un premier élément de coupe (102) et un second élément de coupe (104) qui sont accouplés mobiles de manière pivotante l'un par rapport à l'autre et au moins une unité d'entraînement (122) qui est conçue pour fournir une force d'entraînement (F_{D}) qui provoque ou aide à provoquer un mouvement de fermeture pivotant du premier élément de coupe (102) et du second élément de coupe (104) l'un par rapport à l'autre, dans lequel le second élément de coupe (104) comprend une section de lame (118) conçue pour être en contact avec un objet à couper dans un processus de coupe et une section d'arbre (120) qui est conçue pour recevoir au moins une partie substantielle de la force d'entraînement (F_{D}) dans un processus de coupe pour provoquer ou aider le mouvement de fermeture pivotant du premier élément de coupe (102) et du second élément de coupe (104) l'un par rapport à l'autre, dans lequel l'unité d'entraînement (122) est accouplée de manière supportée à la section d'arbre (120) du second élément de coupe (104),
- dans lequel l'outil de coupe comprend une première poignée (108) qui est accouplée de manière fonctionnelle au premier élément de coupe (102) et une seconde poignée (110) conçue pour être tenue manuellement par un utilisateur et qui est accouplée de manière fonctionnelle au second élément de coupe (104),
- dans lequel l'unité d'entraînement (122) est supportée sur une section de support (144) de la section d'arbre (120) dans le sens inverse de la direction dans laquelle la force d'entraînement s'applique,
- dans lequel la section de support (144) est formée dans une section d'extrémité (120a) de la section d'arbre (120), dans lequel la section d'extrémité (120a) comprend un évidement (146) dans lequel l'unité d'entraînement (122) est au moins partiellement agencée et dans lequel la section de support (144) délimite l'évidement (146) au moins sur un côté,
- dans lequel au moins une structure de support (138) est prévue dans la seconde poignée (110) de l'outil de coupe, dans lequel la structure de support (138) est conçue pour fournir un contact de support entre un palier (130) de l'unité d'entraînement (122) et la section de support (144) de la section d'arbre (120) lorsque l'unité d'entraînement (122) est entraînée pour exercer la force d'entraînement,
- dans lequel la structure de support (138) est conçue pour fournir un siège pour le palier (130), le palier étant prévu pour supporter un arbre d'entraînement de l'unité d'entraînement (122), et est conçue pour être agencée au moins partiellement dans l'évidement (146) de la section d'extrémité de la section de support (144) et pour supporter le palier de l'unité d'entraînement (122) qui est assis dans le siège contre la section de support (144),
- dans lequel l'outil de coupe comprend un élément de traction (132) conçu pour tirer une section d'arbre (116) du premier élément de coupe (102) vers la section d'arbre (120) du second élément de coupe (104),
- dans lequel l'élément de traction (132) est une corde qui peut être enroulée autour d'un élément d'enroulement agencé sur l'arbre d'entraînement en faisant tourner l'arbre d'entraînement.

2. Outil de coupe selon la revendication 1, **caractérisé en ce que** la section de support (144) comprend une surface de support sur laquelle l'unité d'entraînement (122) est supportée.

3. Outil de coupe selon la revendication 2, **caractérisé en ce qu'**au moins la section de support (144), en particulier la section d'arbre complète (120), est dotée d'une section transversale en forme de plaque, en particulier dans lequel la surface de support est formée par un bord avant de la section transversale en forme de plaque et dans lequel un côté plus large de la section transversale en forme de plaque s'étend dans une direction sensiblement parallèle à une direction dans laquelle la force d'entraînement s'applique.

4. Outil de coupe selon la revendication 2 ou 3, **caractérisé en ce que** la surface de support est orientée avec un angle inférieur à 20 degrés, plus préférablement inférieur à 10 degrés, encore plus préférablement orientée sensiblement parallèlement, par rapport à un axe longitudinal (B) de l'arbre d'entraînement de l'unité d'entraînement (122).

5. Outil de coupe selon l'une quelconque des revendications précédentes, **caractérisé en ce qu'**au moins une partie de l'unité d'entraînement (122) et au moins une partie de la section d'arbre (120) sont agencées à l'intérieur d'une ou plusieurs cavités formées par la seconde poignée (110), en particulier dans lequel au moins une partie de l'unité d'entraînement (122) et au moins une partie de la section d'arbre (120) sont fixées rigidement à la seconde poignée (110).

6. Outil de coupe selon l'une quelconque des revendications précédentes, **caractérisé en ce que** l'élément d'enroulement (128) est accouplé de manière fonctionnelle à l'arbre d'entraînement et dans lequel l'arbre d'entraînement est supporté d'un côté par un carter de moteur (124) accouplé de manière fonctionnelle à l'arbre d'entraînement ou un carter d'engrenage d'un engrenage (126) accouplé de manière fonctionnelle à l'arbre d'entraînement ou à un élément de support, en particulier un second palier, et sur un second côté par le palier (130) qui est accouplé de manière supportée à la section d'arbre (120) du second élément de coupe (104).

7. Outil de coupe selon la revendication 6, **caractérisé en ce que** le moteur (124) et/ou l'engrenage (126) et/ou l'élément de support pour supporter l'arbre d'entraînement sont reçus dans une ou plusieurs cavités formées par la seconde poignée (110), en particulier dans lequel la seconde poignée (110) comprend des éléments de fixation (136) faisant saillie dans la ou les cavités et fixant rigidement le moteur (124) et/ou l'engrenage (126) et/ou l'élément de support à la poignée (108, 110).

8. Outil de coupe selon l'une quelconque des revendications précédentes, **caractérisé en ce que** la section d'arbre (120) est fixée rigidement à la seconde poignée (110), en particulier dans lequel la seconde poignée (110) comprend un élément de fixation qui est conçu pour être en liaison par ajustement avec un évidement prévu dans la section d'arbre (120), de préférence de telle sorte que l'élément de fixation peut être inséré dans l'évidement dans une direction de montage de telle sorte que la section d'arbre (120) ne peut pas être éloignée, au moins radialement, de l'élément de fixation.

9. Outil de coupe selon l'une quelconque des revendications précédentes 7 ou 8, **caractérisé en ce que** l'élément de fixation et/ou les éléments de fixation (136) sont formés d'une seule pièce avec la seconde poignée (110) de l'outil de coupe.
